(19) Europäisches Patentamt
European Patent Office
Office européen des brevets

(11) Numéro de publication : **0 392 932 B1**

(12) # FASCICULE DE BREVET EUROPEEN

(45) Date de publication du fascicule du brevet :
20.07.94 Bulletin 94/29

(51) Int. Cl.⁵ : **G06F 12/12**

(21) Numéro de dépôt : **90401027.9**

(22) Date de dépôt : **13.04.90**

---

(54) **Procédé et dispositif pour accélérer les accès mémoire, utilisant un algorithme LRU modifié.**

---

(30) Priorité : **13.04.89 FR 8904882**

(43) Date de publication de la demande :
**17.10.90 Bulletin 90/42**

(45) Mention de la délivrance du brevet :
**20.07.94 Bulletin 94/29**

(84) Etats contractants désignés :
**DE ES FR GB IT NL**

(56) Documents cités :
PATENT ABSTRACTS OF JAPAN, vol. 11, no.
354 (P-638)[2801], 19 novembre 1987, page 59
P 638; & JP-A-62 131 353 (FUJITSU LTD) 13-
06-1987
ELECTRONICS INTERNATIONAL, vol. 55, no.
1, 13 janvier 1982, pages 155-159, New York,
US; W.P. WARD: "Minicomputer blasts
through 4 million instructions a second"
ELECTRONICS INTERNATIONAL, vol. 54, no.
13, 30 juin 1981, pages 119-122, New York, US;
J. CALLAHAN et al.: "Bringing virtual memory
to microsystems"

(56) Documents cités :
IBM TECHNICAL DISCLOSURE BULLETIN,
vol. 23, no. 12, mai 1981, pages 5516-5519, New
York, US; R.L. HOFFMAN et al.: "Reference
and change bit recording"
IBM TECHNICAL DISCLOSURE BULLETIN,
vol. 24, no. 1A, juin 1981, pages 333-335, New
York, US; C.M. MAY: "Management technique
for memory hierarchies"

(73) Titulaire : **BULL S.A.**
**Tour BULL,**
**1, place Carpeaux**
**F-92800 Puteaux (FR)**

(72) Inventeur : **Ducousso, Laurent**
**121 avenue de Malakoff**
**F-75116 Paris (FR)**
Inventeur : **Vallet, Philippe**
**121 avenue de Malakoff**
**F-75116 Paris (FR)**

(74) Mandataire : **Colombe, Michel et al**
**Bull S.A.**
**Tour BULL Cédex 74**
**PC/TB2803**
**F-92039 Paris La Défense (FR)**

## Description

L'invention se situe dans le domaine des systèmes informatiques et concerne les problèmes relatifs à l'accélération des accès aux informations contenues dans la mémoire principale de ces systèmes.

Le sous-système central d'un système informatique comprend généralement trois types d'unités : des processeurs, des modules mémoires formant la mémoire principale et des contrôleurs d'entrée-sortie. Habituellement, les processeurs communiquent avec les modules mémoire par l'intermédiaire d'un bus permettant l'adressage et le transfert des données entre les processeurs et la mémoire principale. Pour qu'une instruction d'un programme s'exécute, ses opérandes doivent être recherchées en mémoire principale. Il en est de même des instructions successives du programme à exécuter. Pour un système fonctionnant en multiprogrammation, la mémoire doit être partagée de façon à permettre un multiplexage entre les programmes. Pour cela on utilise généralement l'adressage virtuel associé à un mécanisme de pagination qui consiste à découper l'espace adressable, ou "espace virtuel", en zones de taille fixe appelées "pages". Dans un tel système, un programme en cours d'exécution peut adresser un espace virtuel auquel doit correspondre une partie de la mémoire principale. Ainsi, une adresse logique ou virtuelle doit être traduite en une adresse physique ou réelle permettant l'adressage de la mémoire.

Une instruction nécessitant un adressage contient des indications permettant au processeur qui l'exécute d'effectuer un développement d'adresse ayant pour résultat une adresse virtuelle, encore appelée adresse effective. Généralement, cette adresse virtuelle est segmentée, c'est-à-dire qu'elle est constituée d'un numéro de segment, d'un numéro de page et d'un déplacement dans la page. Le numéro de segment peut être lui-même subdivisé en un numéro de table de segment et un déplacement dans cette table.

Pour accéder dans la mémoire aux informations associées à cette adresse segmentée, plusieurs accès mémoire sont alors nécessaires : il faut d'abord accéder à une table d'espace d'adresse affectée au processus (programme en cours d'exécution), dans cette table, à l'aide du numéro de table de segment on obtient l'adresse réelle de la table de segment correspondante, en fonction du déplacement dans la table de segment on accède à un descripteur de segment permettant de calculer l'adresse réelle d'une table de page et en fonction du numéro de page définissant le déplacement dans cette table de page on obtient finalement une adresse réelle de page permettant d'adresser la mémoire. L'adresse réelle d'un mot ou d'un octet particulier est obtenue par concaténation de l'adresse réelle de page et du déplacement dans cette page défini par les poids faibles de l'adresse virtuelle.

Or, l'exécution d'un accès mémoire est relativement longue notamment, à cause de l'utilisation d'un bus commun aux processeurs et aux modules mémoire. Aussi pour améliorer les performances du système, on cherche à éviter autant que possible les accès mémoire successifs qui sont en principe nécessaires à chaque adressage. Or la plupart des processus présentent une propriété de localité selon laquelle, pendant une phase donnée de son exécution, le nombre de pages utilisées par un processus est très faible par rapport au nombre total de pages qui lui sont allouées.

Cette propriété peut être mise à profit pour accélérer la traduction de l'adresse virtuelle en adresse réelle. Pour cela, on mémorise dans une mémoire rapide ou dans des registres un certain nombre de couples d'adresse virtuelle et d'adresse réelle associée, appelés "extraits", utilisés par le programme au cours d'une phase d'exécution. Par la suite, pour effectuer la traduction d'une adresse virtuelle en adresse réelle, on accède à cette mémoire rapide de façon associative pour rechercher si l'adresse virtuelle à traduire est déjà présente dans la mémoire rapide. Si c'est le cas, on obtient directement l'adresse réelle sans accéder à la mémoire principale.

La propriété de localité est également à la base de l'usage des antémémoires (souvent appelées mémoires "cache") constituées de mémoires rapides et de petite taille dans lesquelles sont conservées en permanence les pages le plus récemment référencées. La probabilité pour qu'une nouvelle référence concerne une information déjà présente dans l'antémémoire étant élevée, le temps d'accès apparent à l'information est ainsi réduit. De façon analogue à la traduction d'adresse virtuelle en adresse réelle, une antémémoire comporte une table contenant les adresses réelles des pages présentes dans l'antémémoire. Cette table appelée répertoire ("directory" en anglais) peut être consultée de façon associative de façon à déterminer si l'information associée à une adresse réelle donnée est contenue dans l'antémémoire. Si c'est le cas, un mot ou un octet est obtenu en adressant l'antémémoire au moyen des poids faibles de l'adresse virtuelle du mot ou de l'octet.

Dans la suite de l'exposé, nous ne développerons que les problèmes relatifs aux traductions d'adresses, étant entendu que les mêmes considérations pourront s'appliquer aux problèmes des antémémoires. En effet, dans les deux cas, le problème consiste à obtenir rapidement une information associée à une adresse de page. Dans le cas de la traduction d'adresse, l'adresse de page est une adresse virtuelle et l'information associée est l'adresse réelle correspondante, tandis que dans le cas de l'antémémoire, l'adresse de page est une adresse réelle et l'information associée est constituée de l'ensemble des données contenues dans la page.

Comme nous l'avons vu, la mémoire rapide de traduction d'adresses est une mémoire associative comportant un certain nombre de registres ou plus généralement d'emplacements, permettant chacun de mémoriser un extrait constitué par une adresse virtuelle et son adresse réelle associée. Chaque extrait peut être accompagné d'informations complémentaires telles que des indicateurs de droit d'accès ou un indicateurs signalant qu'un accès en écriture a été effectué dans la page associée à cet extrait. Par ailleurs, chaque extrait est associé à un indicateur de présence qui, pour une valeur logique déterminée, signale que l'extrait associé est valide. Ces indicateurs de présence sont par exemple mis à 0 à l'initialisation, c'est-à-dire à chaque fois qu'un processus est activé dans le processeur concerné. Ensuite, au fur et à mesure que le processus utilise des pages nouvelles, les extraits associés sont chargés dans la mémoire associative et simultanément l'indicateur de présence est mis à 1. Lorsqu'un accès mémoire doit être effectué, l'adresse virtuelle est comparée à chaque adresse virtuelle contenue dans la mémoire associative et s'il y a coïncidence entre l'adresse virtuelle recherchée et l'une des adresses virtuelles contenues dans la mémoire alors que son indicateur de présence est à 1, l'adresse réelle correspondante peut être obtenue directement par simple lecture du registre d'adresse réelle.

Pour que ce mécanisme de traduction soit pratiquement réalisable, il est clair que la mémoire associative doit être de taille limitée. Il en résulte que pour certains processus, cette taille est insuffisante pour contenir les extraits de toutes les pages utilisées par le processus. Il faut donc prévoir le cas où la mémoire associative étant pleine, un des extraits présents doit être éliminé pour y charger à la place un nouvel extrait. Pour cela, on met en oeuvre un algorithme de remplacement destiné à sélectionner l'extrait à éliminer. De nombreux algorithmes ont déjà été proposés, comme par exemple :

- l'algorithme FIFO ("first in first out"), où l'extrait le plus ancien est éliminé,
- l'algorithme RAND ("random choice"), où l'extrait est choisi au hasard,
- l'algorithme LFU ("least frequently used"), où l'on supprime l'extrait le moins fréquemment utilisé,
- l'algorithme LRU ("least recently used"), où l'on remplace l'extrait le moins récemment utilisé.

L'algorithme LRU donne théoriquement de bons résultats mais en pratique on préfère utiliser une version simplifiée, appelée pseudo LRU. En effet, pour gérer n extaits, un vrai LRU nécessite la présence et la gestion de $\log_2(n)$ bits par extrait pour conserver l'indication de l'ordre des dernières utilisations des extraits. Par contre, un pseudo LRU n'utilise qu'un seul bit, appelé bit ou indicateur de référence, par extrait.

Selon l'algorithme pseudo LRU, le bit de référence est mis à une première valeur logique (par exemple à 1) lorsque l'extrait présent qui lui est associé est utilisé. Lorqu'un nouvel extrait doit être chargé alors que la mémoire associative est pleine, c'est-à-dire lorsque tous les indicateurs de présence sont à 1, l'extrait à éliminer est le premier dans l'ordre chronologique de remplissage dont le bit de référence est à 0. Lorsqu'on atteint une saturation, c'est-à-dire lorsque les bits de référence sont tous à 1 sauf un, on effectue une remise à 0 de tous les bits de référence et l'extrait dont le bit de référence est à 0 est remplacé par le nouvel extrait. A partir de cet instant, il y a perte de l'historique de l'utilisation des pages.

La perte d'historique due à la saturation provoque une baisse d'efficacité de l'algorithme. De plus, compte tenu du fait qu'un extrait nouvellement chargé est très probablement réutilisé immédiatement après son chargement, il en résulte que la saturation se produit lorsque le dernier extrait est chargé.

Pour évaluer les conséquences de cette perte d'historique, il est utile d'effectuer des simulations portant sur une population de processus spécifiques des applications habituellement traitées par le système. On constate par exemple que pour une certaine population de processus, dans 65 % des cas, seulement 32 extraits sont nécessaires. Cela signifie que 65 % des processus ne nécessitent pas la mise en oeuvre de l'algorithme de remplacement. Par contre l'algorithme sera utilisé au moins une fois par 35 % des processus. Cela a pour conséquence qu'une perte d'historique aura lieu au moins une fois dans 35 % des cas.

Lors d'une simulation, on a également constaté qu'à un instant donné, un programme accédera dans 90 % des cas à l'un des sept derniers extraits appelés. Ce résultat est une confirmation du phénomène de localité déjà évoqué précédemment. Or après la remise à zéro des bits de références après saturation, le seul critère pour sélectionner l'extrait à éliminer est la position de l'extrait dans la mémoire associative. Toutefois, l'emplacement d'un extrait ne donne pas une indication sur le moment de sa dernière utilisation mais de sa première utilisation. Or il est fort possible que des pages utilisées en début de processus le soient à nouveau peu de temps avant la saturation. Dans ce cas, après remise à zéro des bits de référence, ces pages seront éliminées en priorité bien qu'elles aient une forte chance d'être rapidement réutilisées.

Aussi, pour résoudre ce problème et selon l'invention on prévoit que les indicateurs de référence sont maintenus à leur valeur initiale (par exemple à 0) pendant tout le début de l'exécution du processus et tant que le nombre d'extraits présents reste inférieur à une valeur de seuil déterminée. Une fois le seuil atteint, la mise à jour des indicateurs de référence s'effectue normalement. Ainsi, lorsque la mémoire associative est remplie, seuls les extraits utilisés pendant une phase d'exécution correspondant à la fin du remplissage peuvent avoir leur indicateur de référence à une valeur logique (par exemple 1) indiquant une utilisation. Ceci a pour effet qu'en moyenne, un nombre plus important de processus échapperont à la perte d'historique due à la saturation.

Plus précisément l'invention a pour objet un procédé pour accéder à des informations contenues dans la mémoire principale d'un système informatique, une information étant repérée par une adresse, l'ensemble formé par une information et son adresse associée étant appelé "extrait", ledit système comportant une mémoire rapide composée d'une pluralité d'emplacements, chaque emplacement étant capable de mémoriser un extrait, chaque extrait étant associé à un bit indicateur de présence et à un bit indicateur de référence initialisés à une première valeur logique déterminée, un indicateur de présence prenant une deuxième valeur logique lorsque l'extrait correspondant est présent dans ladite mémoire rapide, l'accès à une information s'effectuant par lecture associative recherchant l'extrait présent dans la mémoire rapide et dont l'adresse coïncide avec l'adresse de l'information recherchée, lesdits indicateurs de référence étant représentatifs d'une utilisation des extraits associés pour permettre la mise en oeuvre d'un algorithme de chargement des nouveaux extraits recherchés et non encore présents dans la mémoire rapide, ledit procédé étant caractérisé en ce que les indicateurs de référence sont maintenus à leur première valeur logique tant que les indicateurs de présence indiquent que le nombre d'extraits présents dans la mémoire rapide est inférieur à une valeur de seuil déterminée et en ce qu'un indicateur de référence est forcé à une deuxième valeur logique lorsque l'extrait associé est utilisé, à condition que les indicateurs de présence indiquent que le nombre d'extraits présents soit au moins égal à ladite valeur de seuil.

Il convient de noter que le choix du seuil tiendra compte du nombre n d'emplacements de la mémoire rapide de façon à ce que le nombre d'extraits compris entre la valeur de seuil et ce nombre n corresponde à une période d'historique optimum pour les applications envisagées.

Selon une caractéristique particulière de l'invention, le procédé est en outre caractérisé en ce qu'un rang étant attribué à chaque emplacement de ladite mémoire rapide, les extraits sont initialement chargés par ordre chronologique dans des emplacements de rang croissant et en ce que la valeur de l'indicateur de présence dont le rang est égal à ladite valeur de seuil fournit l'indication que ladite valeur de seuil est atteinte.

Selon un autre aspect, le procédé est caractérisé en ce que si une information recherchée est absente de la mémoire rapide, ladite information est alors recherchée dans la mémoire principale et l'extrait correspondant est chargé dans la mémoire rapide à un emplacement dont le rang est déterminé par ledit algorithme de chargement, en ce que l'indicateur de présence associé est forcé à ladite deuxième valeur logique en synchronisme avec ledit chargement, et en ce qu'une nouvelle recherche associative de l'information recherchée est ensuite effectuée.

Selon encore un autre aspect, le procédé est caractérisé en ce que ledit algorithme de chargement consiste à rechercher dans l'ordre croissant le rang du premier extrait dont l'indicateur de présence est à ladite première valeur logique déterminée ou, à défaut, du premier extrait dont l'indicateur de référence est à ladite première valeur logique déterminée.

L'invention a également pour objet un système informatique permettant la mise en oeuvre du procédé et comprenant des moyens de traitement capables d'accéder par adressage à la mémoire principale dudit système, l'ensemble formé par une adresse et l'information associée contenue dans la mémoire principale étant appelé "extrait", lesdits moyens de traitement comportant une mémoire rapide composée d'une pluralité d'emplacements, chaque emplacement étant capable de mémoriser un desdits extraits, chaque emplacement étant associé à une bascule de présence et à une bascule de référence initialement placées respectivement à un premier état logique, ladite bascule de présence étant placée à un deuxième état logique lorsqu'un extrait est chargé dans l'emplacement associé, ladite mémoire rapide étant associée à des moyens de comparaison délivrant pour chaque emplacement un signal de coïncidence ayant une première valeur logique lorsque l'adresse d'une information recherchée coïncide avec l'adresse de l'extrait présent dans ledit emplacement, ledit système étant caractérisé en ce qu'il comprend des moyens de détection de seuil fournissant à partir des signaux de sortie des bascules de présence un signal de seuil dont la valeur logique indique si le nombre d'extraits présents dans ladite mémoire rapide est au moins égale à une valeur de seuil déterminée et en ce que pour chaque extrait présent, l'état de la bascule de référence associée est commandé par un circuit de gestion forçant ladite bascule de référence à un second état logique lorsque ledit signal de coïncidence indique une coïncidence alors que ledit signal de seuil indique que le seuil est atteint.

Dans l'article de W.P. WARD "Minicomputer blasts through 4 million instructions a second" dans Electronics, volume 55, no 1, 13 janvier 1982, pages 155-159, New-York, US, est décrit l'utilisation d'un algorithme LRU avec un seul bit.

Le document JP-A- 62131353 décrit un système utilisant un algorithme LRU où le contenu des circuits LRU n'est adapté que si le nombre de pages accédées dépasse un seuil déterminé.

D'autres caractéristiques et détails de réalisation pour la mise en oeuvre de l'invention sont exposés dans la suite de la description en relation avec les figures où :

- la figure 1 représente de façon schématique les moyens de traitement d'un système informatique pour la mise en oeuvre de l'invention ;
- la figure 2 représente un mode de réalisation de la mémoire rapide ;
- la figure 3 représente un circuit de commande des indicateurs de référence ;
- la figure 4 représente un détail de réalisation du circuit de commande de la figure 3 ;
- la figure 5 représente un circuit de gestion d'une des bascules de référence ;
- la figure 6 représente un chronogramme permettant d'expliquer le fonctionnement des circuits représentés aux figures 3 à 5 ;
- la figure 7 représente un circuit de sélection permettant de déterminer l'emplacement de la mémoire rapide où doit être chargé un nouvel extrait ;
- les figures 8 et 9 représentent des détails de réalisation du circuit de la figure 7 ;
- la figure 10 représente un circuit de commande de chargement d'un des emplacements de la mémoire rapide.

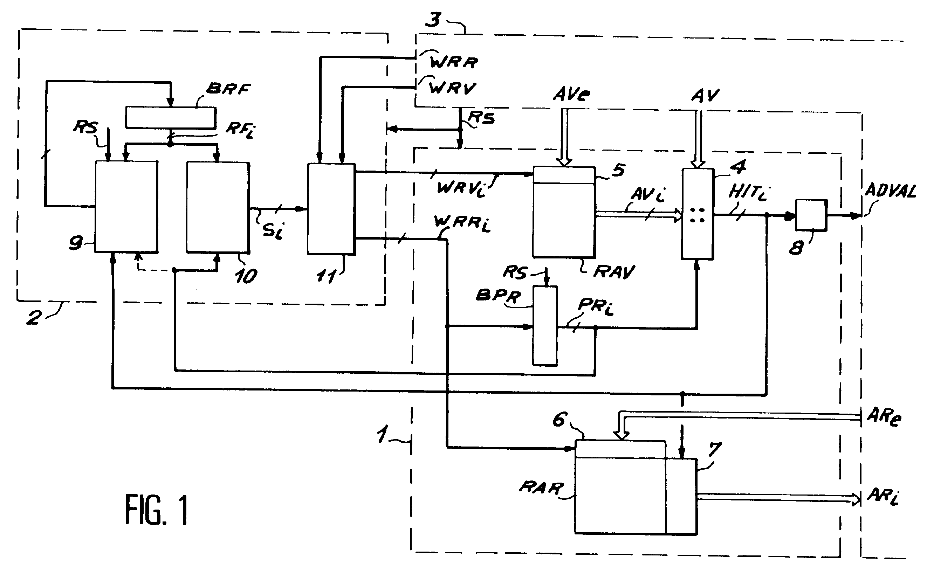

La figure 1 est une représentation générale des moyens de traitement d'un système informatique permettant de mettre en oeuvre l'invention. Ces moyens comprennent la mémoire rapide ou associative 1 reliée à son contrôleur 2 et aux autres circuits 3 d'un processeur. De façon classique, le processeur est relié à la mémoire principale (non représentée) par les circuits 3. Les circuits 3 comportent tous les moyens de traitement du processeur autres que ceux concernant la traduction d'adresse. En particulier, ils comportent une unité de développement d'adresse, généralement microprogrammée, pour calculer à partir des instructions les adresses virtuelles AV des informations recherchées. Le micrologiciel des circuits 3 effectue les recherches dans les tables pour obtenir des adresses réelles en fonction des adresses virtuelles. Cette traduction d'adresse est accélérée grâce à la mémoire associative 1 constituée d'un certain nombre n de registres d'adresse virtuelle RAV et du même nombre de registres d'adresse réelle RAR. La mémoire 1 comprend également un ensemble de n bascules BPR associées respectivement aux registres d'adresse virtuelle et d'adresse réelle. L'adresse virtuelle $AV_i$ contenue dans le registre d'adresse virtuelle de rang i et l'adresse réelle $AR_i$ contenue dans le registre d'adresse réelle de même rang constituent l'extrait i. Cet extrait i est associé à un indicateur de présence $PR_i$ dont la valeur logique correspond à l'état de la bascule de présence correspondante. Un comparateur 4 est relié aux sorties $AV_i$ des registres d'adresse virtuelle RAV et reçoit du micrologiciel l'adresse virtuelle AV à traduire. Le circuit de comparaison 4 est validé par les signaux de sorties $PR_i$ des

bascules de présence BPR. Le circuit 4 délivre des signaux de coïncidence $HIT_i$ dont les valeurs logiques sont représentatives de l'égalité entre l'adresse logique recherchée et l'une des adresses logiques contenues dans les registres RAV. Les signaux $HIT_i$ sont appliqués à un circuit de validation 8 fournissant au micrologiciel un signal de validation d'adresse AD VAL indiquant si la traduction d'adresse est réussie.

En cas d'échec, le signal AD VAL déclenche un microprogramme de recherche dans les tables pour obtenir l'adresse réelle. Une fois la recherche effectuée, l'adresse virtuelle $AV_e$ et l'adresse réelle $AR_e$ associée sont appliquées respectivement aux interfaces d'entrée 5, 6 des registres d'adresse virtuelle et réelle pour être inscrits dans l'un de ces registres respectivement sous le contrôle des signaux de commande d'écriture $WRV_i$ et $WRR_i$.

Si la traduction est réussie, les signaux de coïncidence $HIT_i$ autorisent par l'interface 7 la lecture du registre d'adresse réelle contenant la traduction recherchée.

Le contrôleur 2 comprend un ensemble de bascules de référence BRF associées respectivement aux emplacements de la mémoire 1, donc aux extraits qu'elle contient. L'état $RF_i$ des bascules BRF est déterminé par un circuit de commande 9 qui reçoit les signaux de coïncidence $HIT_i$ et qui est relié aux sorties $RF_i$ des bascules de référence BRF. Un circuit de sélection 10 relié aux sorties des bascules de présence BPR et de référence BRF délivre des signaux de sélection $S_i$ qui sont appliqués à un circuit de commande de chargement 11 délivrant les signaux $WRV_i$ et $WRR_i$ déjà mentionnés. Les signaux de sélection $S_i$ permettent de déterminer les registres d'adresses virtuelles et réelles où un nouvel extrait non présent dans la table doit être chargé. Les commandes d'écriture $WRV_i$ et $WRR_i$ sont déterminées par le circuit de commande de chargement 11 en fonction des signaux de sélection $S_i$ et des signaux communs de commande d'écriture WRR, WRV délivrés par le micrologiciel. Le micrologiciel 3 fournit également un signal RS commandant la remise à zéro des bascules de présence et de référence.

Le dispositif de la figure 1 fonctionne de la façon suivante. Lorsqu'une adresse virtuelle AV est à traduire, le micrologiciel place cette adresse à l'entrée du comparateur 4. En cas de coïncidence, les signaux $HIT_i$ valident le registre d'adresse réelle contenant la traduction recherchée et le circuit 8 valide cette adresse par le signal AD VAL. En fonction des signaux de coïncidence $HIT_i$, du nombre d'extraits présents dans la mémoire rapide et de l'état antérieur $RF_i$ des bascules de référence, le circuit de commande 9 réactualise l'état de ces dernières. En fonction du nouvel état $RF_i$ de ces bascules et des indicateurs de présence $PR_i$, le circuit de sélection 10 réactualise les signaux de sélection $S_i$ permettant de déterminer les nouveaux registres dans lesquelles le prochain extrait à charger sera écrit.

En cas d'échec, cette situation est signalée par le signal AD VAL qui déclenche le microprogramme de recherche dans les tables. Une fois la recherche effectuée, l'extrait correspondant $AV_e$, $AR_e$ est présenté à l'entrée des interfaces 5, 6. Cet extrait est ensuite chargé sous la commande du circuit 11 en fonction des signaux d'écriture WRR, WRV et des signaux de sélection $S_i$. Une fois l'extrait chargé dans les registres sélectionnés, le micrologiciel effectue une nouvelle tentative de traduction de l'adresse virtuelle à traduire.

Selon une particularité de cette réalisation, le circuit de commande 9 prend en compte le nombre d'extraits présents dans la mémoire. Tant que ce nombre est inférieur à une valeur de seuil t déterminée, les indicateurs de référence $RF_i$ sont maintenus inchangés et conservent donc la valeur initiale (par exemple 0) qui leur a été imposée par le signal RS en début d'exécution du processus, par exemple suite à un dispatching. Dès que le nombre d'extraits présents atteint ou dépasse la valeur t, les indicateurs $RF_i$ peuvent être modifiés selon l'algorithme classique pseudo LRU. Nous verrons dans la suite de la description comment ce seuil peut être détecté en pratique.

La valeur de seuil sera déterminée en recherchant la valeur optimale du nombre n - t qui correspond au nombre d'extraits chargés entre le moment où le seuil est atteint et le moment où la mémoire associative est pleine. Pour cela, on peut utiliser des données statistiques portant notamment sur les nombres d'extraits utilisés par les processus, entre deux dispatchings et l'ancienneté des pages réutilisées. Une autre solution consiste à effectuer des simulations de fonctionnement du système avec des programmes caractéristiques, en faisant varier la valeur de seuil.

A titre d'exemple non limitatif, pour un ordinateur universel de type multiprocesseur, avec n = 32, on peut choisir t = 24.

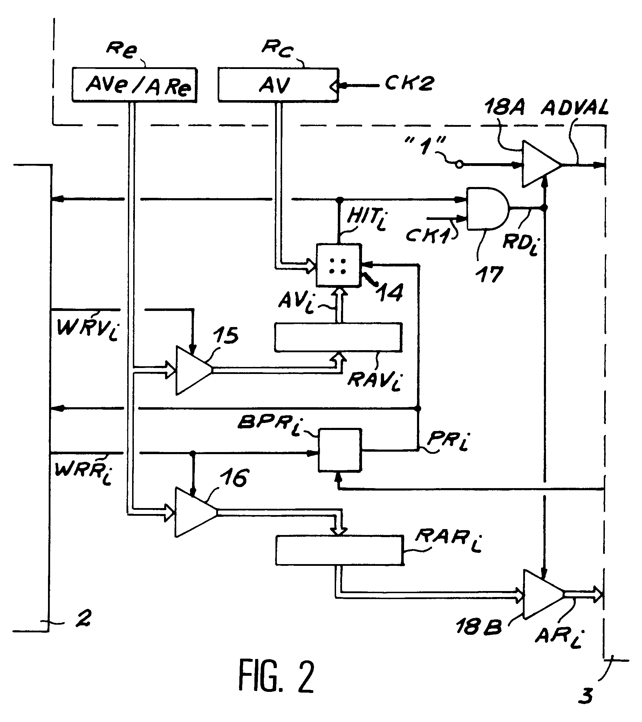

La figure 2 représente la partie de la mémoire 1 associée à l'un des extraits. Les adresses virtuelle et réelle de l'extrait i supposé chargé sont respectivement contenues dans les registres d'adresse virtuelle $RAV_i$ et réelle $RAR_i$. La sortie parallèle $AV_i$ du registre d'adresse virtuelle $RAV_i$ est reliée à une première entrée d'un circuit de comparaison 14 du comparateur 4 dont la seconde entrée reçoit l'adresse virtuelle à traduire AV fournie par le registre $R_c$. Une bascule de présence $BPR_i$ a sa sortie $PR_i$ reliée à l'entrée de validation du circuit 14. La sortie $PR_i$ est aussi reliée au contrôleur 2. La sortie du circuit 14 est reliée d'une part au contrôleur 2 et d'autre part à l'entrée d'une porte de synchronisation 17. La porte 17 est synchronisée par la première phase CK1 d'un signal d'horloge.

La sortie parallèle du registre d'adresse réelle $RAR_i$ est reliée à l'entrée d'un amplificateur 18B validé par le signal de sortie $RD_i$ de la porte de synchronisation 17. Le signal $RD_i$ valide également l'amplificateur 18A qui reçoit en entrée une tension correspondant à la valeur 1 logique. Les signaux AD VAL et $AR_i$ issus des amplificateurs 18A et 18B sont envoyés au micrologiciel.

Les adresses virtuelle et réelle $AV_e$, $AR_e$ destinées à être chargées dans les registres sont initialement placées dans un registre de sortie $R_e$ du micrologiciel . La sortie parallèle du registre $R_e$ est reliée aux entrées parallèles des registres $RAV_i$ et $RAR_i$ par l'intermédiaire respectivement des amplificateurs 15 et 16. Les amplificateurs 15, 16 sont validés respectivement par les signaux $WRV_i$ et $WRR_i$ fournis par le contrôleur 2.

Le circuit de la figure 2 fonctionne de la façon suivante. Une horloge (non représentée) fournit un signal d'horloge à 2 phases CK1 et CK2. Pendant la phase CK2, le micrologiciel place l'adresse virtuelle à traduire AV dans le registre $R_c$. Pendant la phase suivante CK1, cette adresse est comparée dans le circuit 14 à l'adresse virtuelle $AV_i$ contenue dans le registre $RAV_i$. Si les adresses AV et $AV_i$ sont différentes, ou si l'indicateur de présence $PR_i$ est à zéro, le signal de coïncidence $HIT_i$ prend la valeur zéro. Il en résulte que pendant la phase CK1, les amplificateurs 18A et 18B sont maintenus à l'état de haute impédance.

Si par contre les adresses AV et $AV_i$ sont identiques alors que l'indicateur de présence $PR_i$ est à 1, le signal de coïncidence $HIT_i$ prend la valeur 1. Ainsi, pendant la phase CK1, l'adresse réelle $AR_i$ contenue dans le registre $RAR_i$ est transmise au micrologiciel par l'intermédiaire de l'amplificateur 18B. Simultanément le signal AD VAL est à 1, indiquant ainsi le succès de la traduction. On peut noter que les amplificateurs 18A associés aux différents extraits de la mémoire effectuent une fonction OU cablée pouvant être avantageusement réalisée au moyen d'une ligne préchargée pendant la phase CK2 et sélectivement déchargée par l'un des signaux $RD_i$ pendant la phase CK1.

Pour charger un nouvel extrait dans la mémoire rapide, le micrologiciel place d'abord l'adresse virtuelle $AV_e$ de l'extrait dans le registre $R_e$ et active le signal de commande d'écriture d'adresse virtuelle WRV. Si le registre $RAV_i$ est sélectionné, le circuit de chargement 11 du contrôleur 2 fournit un signal $WRV_i$ qui valide l'amplificateur 15. De même, l'adresse réelle correspondante $AR_e$ est ensuite placée dans le registre de sortie $R_e$ et le signal $WRR_i$ valide l'amplificateur 16.

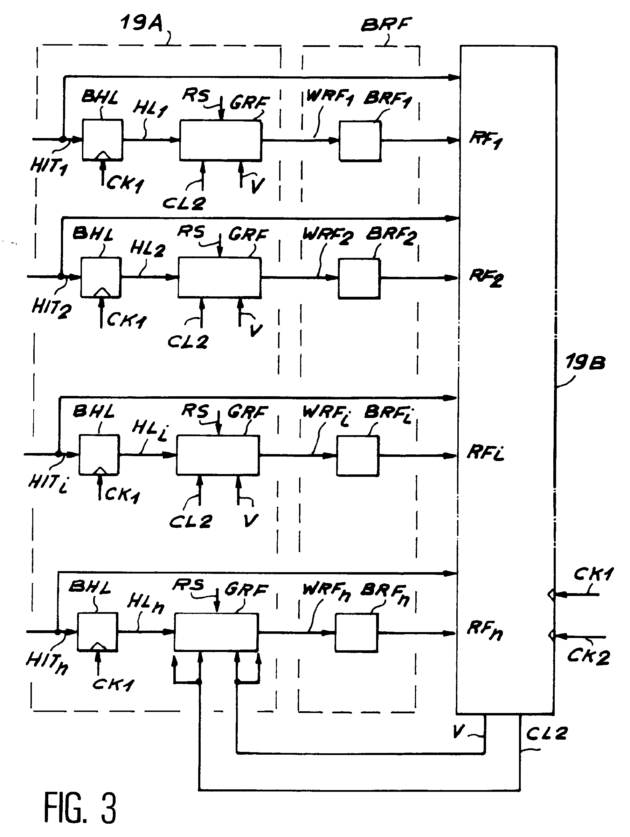

La figure 3 représente plus en détail les bascules de référence BRF et leur circuit de commande 9. Le circuit de commande 9 se décompose en un circuit de commande commun 19B et un ensemble 19A de circuits de gestions des bascules BRF. Les emplacements (couples de registres) de la mémoire associative étant référencés par les indices 1, 2, ..., i, ... , n, on leur associe respectivement les bascules $BRF_1$, $BRF_2$, ..., $BRF_i$, ..., $BRF_n$. Chaque bascule $BRF_i$ est commandée par un signal $WRF_i$ fourni par un circuit de gestion GRF associé. Les sorties $RF_1$, $RF_2$, ..., $RF_i$, ..., $RF_n$ sont reliées au circuit de commande commun 19B qui fournit à chaque circuit de gestion GRF un signal V de prépositionnement de mise à 1 et un signal CL2 de prépositionnement de remise à 0. Le circuit 19B reçoit également les signaux de coïncidence $HIT_1$, $HIT_2$, ..., $HIT_i$, ..., $HIT_n$.

Chaque circuit de gestion GRF reçoit un signal $HL_i$ obtenu par verrouillage sur la phase CK1 par une bascule BHL du signal de coïncidence $HIT_i$ associé.

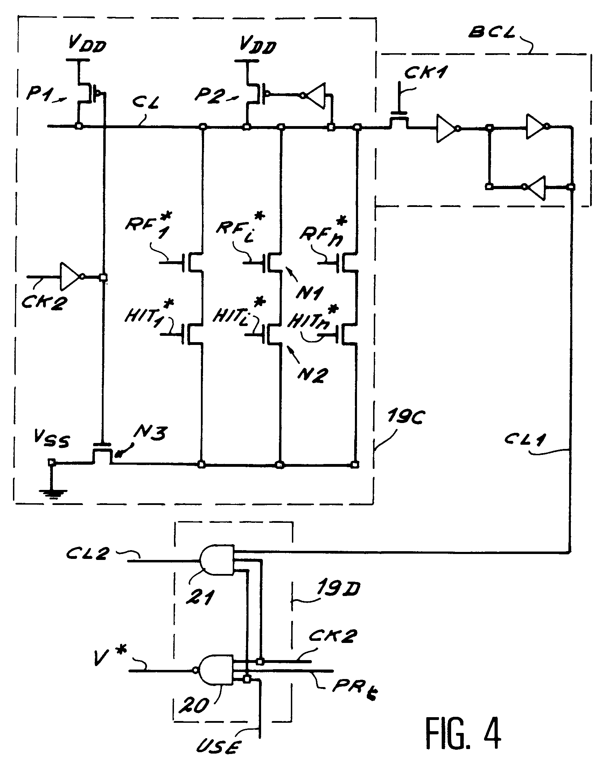

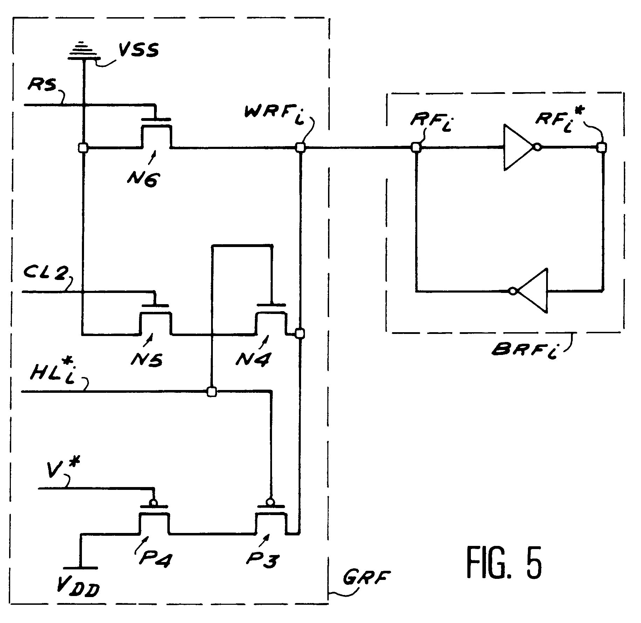

Le fonctionnement du circuit de la figure 3 sera expliqué avec les figures 4 et 5 qui représentent respectivement des réalisations détaillées du circuit de commande commun 19B et du circuit de gestion GRF. Par convention, les explications seront données en logique positive.

Le circuit de commande commun 19B de la figure 4 est composé d'un circuit d'évaluation 19C, d'une bascule BCL et d'un circuit de synchronisation 19D.

Le circuit d'évaluation 19C comporte une ligne d'évaluation CL dont l'état indique si la condition de saturation de la mémoire rapide est atteinte. Le circuit 19C consiste en une porte logique complexe en technologie CMOS dont la ligne CL est préchargée pendant la phase CK2 au moyen des transistors PMOS P1 et P2. La ligne CL est évaluée en fonction des signaux $HIT_i^*$ et $RF_i^*$ respectivement compléments des signaux de coïncidence $HIT_i$ et de référence $RF_i$ associés aux extraits contenus dans la mémoire rapide. L'état de la ligne CL est verrouillé par la phase CK1 dans la bascule BCL qui délivre en sortie un signal d'évaluation verrouillé CL1.

La ligne CL est reliée à la masse VSS par l'intermédiaire du transistor NMOS commun N3 et, pour chaque extrait, du montage série formé de deux transistors NMOS N1 et N2 dont les grilles reçoivent respectivement les signaux $RF_i^*$ et $HIT_i^*$ de l'extrait associé. Ce montage permet de réaliser la fonction logique (évaluée pendant la phase CK1) :

$$CL = \Sigma^* (RF_i^* . HIT_i^*)$$

où $\Sigma^*$ est la fonction NON-OU ("NOR") appliquée à l'ensemble des produits logiques $RF_i^*.HIT_i^*$.

Le transistor N3, bloqué pendant la phase CK2 contribue à la précharge de la ligne CL.

Ainsi, à partir du début du fonctionnement de la mémoire associative où tous les indicateurs sont initialisés à 0, la ligne CL est déchargée à chaque phase d'évaluation tant que la condition de saturation n'est pas atteinte et cette condition correspond au cas où tous les indicateurs de référence sont à 1 sauf un pour lequel il y a coïncidence. Dans ce dernier cas, la ligne CL conserve la valeur 1 logique pendant la phase d'évaluation, signalant ainsi que la condition de saturation est atteinte.

Le circuit de synchronisation 19D comprend une porte ET 21 à trois entrées. Une première entrée reçoit le signal d'évaluation verrouillé CL1, une seconde entrée reçoit la phase CK2 et la troisième entrée reçoit un signal USE d'autorisation de fonctionnement. Le signal USE est un signal de commande de fonctionnement fourni par le micrologiciel.

Le circuit 19D comprend également une porte NON-ET ("NAND") 20 à trois entrées recevant respectivement la phase d'horloge CK2, le signal USE et un signal de seuil $PR_t$ prenant la valeur 1 logique lorsque le seuil de chargement de la mémoire rapide est atteint. La porte 20 fournit en sortie le signal $V^*$ qui est le complément du signal V de prépositionnement de mise à 1. A condition que les emplacements soient chargés dans un ordre déterminé, le signal de seuil peut être obtenu simplement par la lecture de la bascule $BPR_t$ dont le rang est égal à la valeur du seuil t et qui a été choisi.

La figure 5 représente la bascule de référence $BRF_i$ et son circuit de gestion GRF associé. La bascule $BRF_i$ est simplement constitué de deux inverseurs montés en tête bêche qui fournissent l'indicateur de référence $RF_i$ et son complément $RF_i^*$.

L'état $RF_i$ de la bascule $BRF_i$ est commandé par la ligne $WRF_i$. La ligne $WRF_i$ peut être déchargée par l'intermédiaire du montage série formé de deux transistors NMOS N4, N5 ou par l'intermédiaire d'un transistor NMOS N6. Les transistors N4, N5 et N6 reçoivent respectivement sur leur grille le signal $HL_i^*$ qui est le complément du signal $HL_i$, le signal CL2 et le signal RS. Il en résulte que la ligne $WRF_i$ est déchargée lorsque le signal RS est à 1 ou lorsque le signal CL2 est à 1 alors que le signal $HL_i$ est à 0. Ainsi, la bascule $BRF_i$ est forcée à 0 lorsque la condition de saturation est détectée alors que l'adresse virtuelle contenue dans le registre associé ne coïncide pas avec l'adresse virtuelle à traduire.

La ligne $WRF_i$ peut être placée à la valeur 1 logique par l'intermédiaire du montage série formé de deux transistors PMOS P3, P4 recevant respectivement sur leur grille les signaux $HL_i^*$ et $V^*$. Il résulte de ce montage que la bascule $BRF_i$ est forcée à 1 lorsque les signaux V et $HL_i$ sont à 1, c'est-à-dire lorsque l'adresse virtuelle recherchée coïncide avec l'adresse virtuelle contenue dans le registre à condition que le seuil soit atteint.

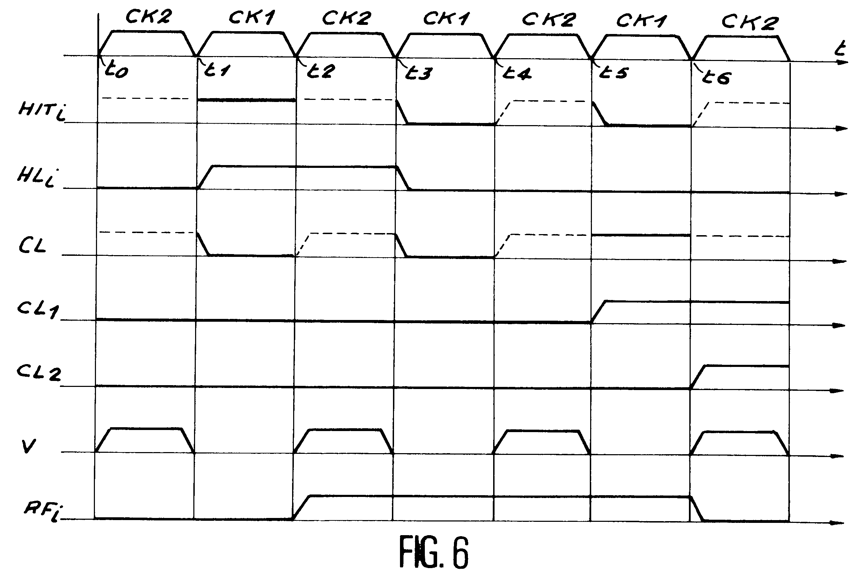

Le fonctionnement complet des circuits des figures 3, 4 et 5 va être maintenant exposé en relation avec les chronogrammes de la figure 6.

Les chronogrammes de la figures 6 représentent les variations en fonction du temps des signaux CL, CL1, CL2 et V engendrés par le circuit de commande commun 19B ainsi que des signaux $HIT_i$, $HL_i$ et $RF_i$ associés à l'extrait i de la mémoire associative. On admet que l'extrait i considéré est présent, c'est-à-dire que l'indicateur $PR_i$ est à 1. On a supposé également que le seuil est déjà atteint, c'est-à-dire que le signal V est à 1 pendant la phase CK2, donc que le signal V* est à 0 pendant cette phase. On suppose enfin qu'à l'instant initial $t_0$ l'indicateur de référence $RF_i$ et le signal d'évaluation verrouillé CL1 sont tous deux à 0.

A partir de l'instant $t_0$ pendant la phase CK2 s'effectue la précharge de la ligne CL du circuit 19C. A partir de l'instant $t_1$, pendant la phase suivante CK1 s'effectue l'évaluation du signal de coïncidence $HIT_i$ supposé prendre la valeur 1. Pendant cette phase, le signal $HIT_i$ est verrouillé par la bascule BHL dont l'état $HL_i$ passe à 1. Simultanément, la ligne CL est évaluée. En supposant que la saturation n'est pas atteinte, le signal CL passe à 0 et les signaux CL1 et CL2 restent également à 0. Pendant la phase suivante CK2 à partir de l'instant $t_2$, la ligne CL est à nouveau préchargée. D'autre part, les signaux de coïncidence $HL_i$ et de validation V étant à 1, les transistors P3 et P4 du circuit de gestion GRF sont passants, la ligne $WRF_i$ est chargé à une tension positive forçant ainsi l'indicateur $RF_i$ à 1.

Pendant la phase suivante CK1 à partir de l'instant $t_3$, en supposant qu'il n'y a pas coïncidence, le signal de coïncidence $HIT_i$ passe à 0 forçant ainsi le signal $HL_i$ à 0. En supposant toujours que la condition de saturation n'est pas atteinte, la ligne CL est déchargée pendant cette phase et les signaux CL1 et CL2 restent à 0. Il en résulte que pendant la phase suivante CK2 à partir de l'instant $t_4$, le signal CL2 à 0 maintient le transistor N5 à l'état bloqué et empêche ainsi la remise à 0 de la bascule $BRF_i$.

Pendant la phase suivante CK1 à partir de l'instant $t_5$, nous avons supposé que la condition de seuil était atteinte et que le signal $HIT_i$ était à 0. Il en résulte que la ligne CL reste chargée provoquant ainsi la mise à 1 de la bascule BCL dont l'état CL1 passe à 1. Ainsi pendant la phase suivante CK2 à partir de l'instant $t_6$, le signal de prépositionnement de remise à 0 CL2 passe à 1, rendant passant le transistor N5. Comme le signal $HL_i$ est à 0, le transistor N4 est également passant et la ligne $WRF_i$ est déchargée et l'indicateur $RF_i$ est remis à 0.

La description qui précède montre que la mémoire associative fonctionne en permanence en deux phases d'horloge même lorsque les indicateurs de références doivent être remis à 0.

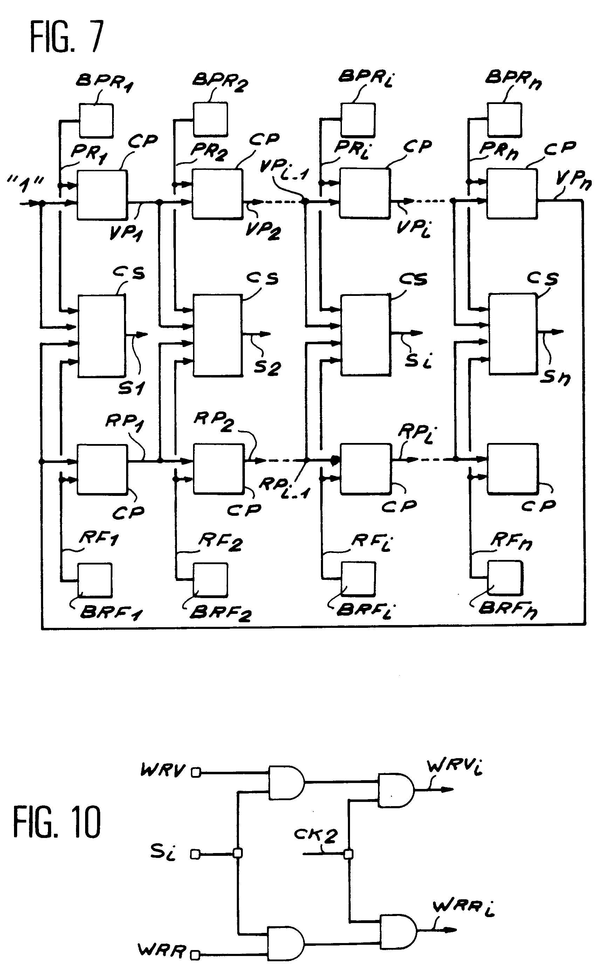

La figure 7 représente le circuit de sélection 10 mentionné en référence à la figure 1. Nous retrouvons les bascules de présence BPR1, BPR2, ..., $BPR_i$, ..., $BPR_n$ et de référence BRF1, $BRF_2$, ..., $BRF_i$, ..., $BRF_n$ associées respectivement aux extraits de rang 1, 2, ..., i, ..., n de la mémoire associative.

A chaque extrait i, est associé une cellule de sélection CS et deux circuits de propragation CP d'un signal de demande associés respectivement aux bascules de présence et de référence de l'extrait.

Chaque circuit de propagation CP fournit un signal de demande $VP_i$, respectivement $RP_i$, et reçoit l'indicateur $PR_i$, respectivement $RF_i$, de la bascule associée ainsi que le signal de demande $VP_{i-1}$, respectivement $RP_{i-1}$, issu du circuit de propagation amont.

La sortie $VP_n$ du circuit de propagation CP associé à la bascule de présence $BPR_n$ du dernier extrait de rang n est appliquée à l'entrée de demande du circuit de propagation associé à la bascule de référence $BRF_1$ du premier extrait. D'autre part, l'entrée de demande du circuit de propagation CP associé à la bascule de présence $BPR_1$ du premier extrait reçoit en permanence un signal représentatif de l'existence d'une demande. Dans l'exemple représenté, nous avons supposé qu'une demande était présente lorsque le signal de demande associé était à 1. Bien entendu, on pourrait choisir la convention inverse sans sortir pour cela du cadre de l'invention.

Chaque circuit de propagation est conçu de façon à délivrer un signal de demande $VP_i$, respectivement $RP_i$, représentatif de l'existence d'une demande lorsque le signal de demande amont $VP_{i-1}$, respectivement $RP_{i-1}$, indique l'existence d'une demande alors que l'indicateur $PR_i$, respectivement $RF_i$ est à 1. D'autre part, la cellule de sélection CS fournit un signal de sélection $S_i$ représentatif de la sélection de l'extrait i lorsque l'un des signaux de demande amont $VP_{i-1}$ ou $RP_{i-1}$ signale l'existence d'une demande alors que la bascule associée $BPR_i$ ou $BRF_i$ est à 0.

Le circuit de la figure 7 fonctionne de la façon suivante. En fonction de l'état des bascules de présence et de référence, le signal de demande appliqué en permanence à l'entrée du circuit de propagation associé à la première bascule de présence $BPR_1$ peut se propager de proche en proche, dans l'ordre croissant des extraits, par l'intermédiaire des circuits de propagation associés d'abord aux bascules de présence puis par l'intermédiaire des circuits de propagation associés aux bascules de référence. La propagation du signal de demande s'arrête au niveau du circuit de propagation qui est associé à une bascule de présence ou de référence qui est à 0. La cellule de sélection associé à cet extrait place alors le signal de sélection $S_i$ à une valeur logique déterminée signalant que l'écriture d'un nouvel extrait doit s'effectuer dans les registres associés.

Le circuit de la figure 7 permet donc de pointer en permanence sur l'emplacement de la mémoire associative destiné à recevoir un nouvel extrait à charger. L'algorithme de chargement mis en oeuvre par ce circuit consiste donc à rechercher par ordre croissant des rangs affectés aux emplacements le premier emplacement ne contenant aucun extrait (le premier dont l'indicateur de présence $PR_i$ est à 0) puis le premier extrait qui n'a pas été utilisé récemment (le premier dont l'indicateur de référence $RF_i$ est à 0). Selon cette réalisation, la mise à jour des signaux de sélection $S_i$ est asservie automatiquement au changement d'état des bascules de présence et de référence.

Compte tenu du montage en cascade des circuits de propagation, le temps de réaction de ce circuit est assez long. Cependant, cet inconvénient n'est pas déterminant car l'utilisation des signaux de sélection n'intervient qu'après la recherche dans les tables d'un nouvel extrait à charger, ce qui est aussi une opération assez longue. Toutefois, la lenteur du circuit de sélection peut devenir gênante si la mémoire associative comprend un grand nombre d'extraits. Aussi, pour remédier à cet inconvénient et selon une variante de réalisation avantageuse, il est proposé une optimisation des cellules de sélection et des circuits de propagation en vue de réduire le nombre de couches de ces circuits, donc d'augmenter la rapidité de fonctionnement.

Dans ce but, on prévoit des cellules de deux types différents selon qu'elles sont associées aux emplacements de rangs pairs ou impairs.

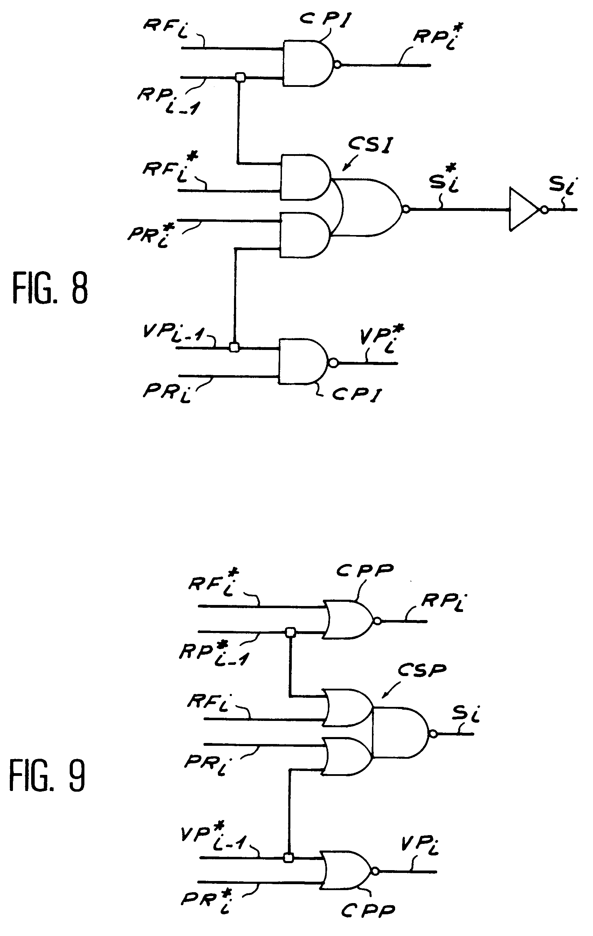

La figure 8 représente la cellule de sélection CSI et les circuits de propagation CPI associés à un emplacment de rang impair. Le circuit de propagation CPI consistent en une porte NON ET ("NAND") recevant sur une première entrée l'indicateur associé $RF_i$, $PR_i$ et sur une seconde entrée le signal de demande amont $RP_{i-1}$, $VP_{i-1}$. Les portes CPI délivrent en sortie les compléments $RP_i{}^*$, $VP_i{}^*$ des signaux de demande. La cellule CSI est une porte logique complexe qui reçoit en entrée les signaux de demandes amont $RP_{i-1}$, $VP_{i-1}$ et les compléments $RF_i{}^*$, $PR_i{}^*$ des indicateurs $RF_i$, $PR_i$. La porte CSI délivre en sortie le signal $S_i{}^*$, complément du signal de sélection $S_i$ vérifiant l'équation :

$$S_i = RF_i{}^* . RP_{i-1} + PR_i{}^* VP_{i-1}$$

Pour obtenir le signal $S_i$, la sortie de la porte CSI est reliée à un inverseur.

La figure 9 représente une cellule de sélection CSP et les circuits de propagation CPP associés à un emplacement de rang pair. Une cellule de propagation CPP est réalisée au moyen d'une porte NON OU ("NOR") recevant sur une première entrée le complément d'indicateur $RF_i$, $PR_i$ associé et sur une deuxième entrée le complément $RP_{i-1}{}^*$, du signal de demande $RP_{i-1}$, $VP_{i-1}$ issu de l'étage impair précédent. La cellule de sélection CSP est une porte complexe recevant en entrée les indicateurs $RF_i$, $PR_i$ et les compléments des signaux de demande associés $RP_{i-1}$, $VP_{i-1}$. La porte CSP délivre le signal de sélection $S_i$ vérifiant l'équation logique précédente.

Les cellules CSI, CSP et les portes CSI, CPP peuvent être facilement réalisées en technologie CMOS.

La figure 10 représente enfin le circuit permettant d'engendrer les signaux de commande d'écriture $WRV_i$ et $WRR_i$ associés respectivement aux registres $RAV_i$ et $RAR_i$ en fonction des signaux de commande WRV, WRR et de sélection $S_i$. Le circuit de la figure 10 est simplement réalisé au moyen des portes logiques ET permettant la transmission respectivement des signaux communs de commande d'écriture de l'adresse virtuelle WRV ou réelle WRR validés par le signal de sélection $S_i$ et synchronisé par la phase d'horloge CK2.

**Revendications**

1. Procédé pour accéder à des informations contenues dans la mémoire principale d'un système informatique, une information étant repérée par une adresse, l'ensemble formé par une information et son adresse associée étant appelé "extrait", ledit système comportant une mémoire rapide (1, RAR, RAV) composée d'une pluralité d'emplacements ($RAR_i$, $RAV_i$), chaque emplacement étant capable de mémoriser un extrait, chaque extrait étant associé à un bit indicateur de présence ($PR_i$) et à un bit indicateur de référence ($RF_i$) initialisés à une première valeur logique déterminée, un indicateur de présence ($PR_i$) prenant une deuxième valeur logique lorsque l'extrait correspondant est présent dans ladite mémoire rapide (1, RAV, RAR), l'accès à une information s'effectuant par lecture associative recherchant l'extrait présent dans la mémoire rapide et dont l'adresse coïncide avec l'adresse de l'information recherchée, lesdits indicateurs de référence ($RF_i$) étant représentatifs d'une utilisation des extraits associés pour permettre la mise en oeuvre d'un algorithme de chargement des nouveaux extraits recherchés et non encore présents dans la mémoire rapide, ledit procédé étant caractérisé en ce que les indicateurs de référence ($RF_i$) sont maintenus à leur première valeur logique tant que les indicateurs de présence indiquent que le nombre d'extraits présents dans la mémoire rapide est inférieur à une valeur de seuil (t) déterminée et en ce qu'un indicateur de référence ($RF_i$) est forcé à une deuxième valeur logique lorsque l'extrait associé est utilisé, à condition que les indicateurs de présence indiquent que le nombre d'extraits présents soit au moins égal à ladite valeur de seuil (t).

2. Procédé selon la revendication 1, caractérisé en ce qu'un rang étant attribué à chaque emplacement de ladite mémoire rapide, les extraits sont initialement chargés par ordre chronologique dans des emplacements de rang croissant et en ce que la valeur de l'indicateur de présence ($PR_i$) dont le rang (i) est égal à ladite valeur de seuil (t) fournit l'indication que ladite valeur de seuil (t) est atteinte.

3. Procédé selon l'une des revendications 1 ou 2, caractérisé en ce que si une information recherchée est absente de la mémoire rapide, ladite information est alors recherchée dans la mémoire principale et l'extrait correspondant est chargé dans la mémoire rapide à un emplacement dont le rang est déterminé par ledit algorithme de chargement, en ce que l'indicateur de présence ($PR_i$) associé est forcé à ladite deuxième valeur logique en synchronisme avec ledit chargement, et en ce qu'une nouvelle recherche associative de l'information recherchée est ensuite effectuée.

4. Procédé selon la revendication 3, caractérisé en ce que ledit algorithme de chargement consiste à rechercher dans l'ordre croissant le rang du premier extrait dont l'indicateur de présence ($PR_i$) est à ladite première valeur logique déterminée ou, à défaut, du premier extrait dont l'indicateur de référence ($RF_i$) est à ladite première valeur logique déterminée.

5. Procédé selon l'une des revendications 1 à 4, caractérisé en ce que, ledit système possédant un mécanisme de mémoire virtuelle paginée, ladite adresse de chaque extrait est une adresse virtuelle de page et ladite information associée est l'adresse réelle de ladite page.

6. Procédé selon l'une des revendications 1 à 4, caractérisé en ce que la mémoire principale étant organisée en page, ladite adresse de chaque extrait est une adresse réelle de page et ladite information associée est constituée par les données contenues dans ladite page.

7. Système informatique comprenant des moyens de traitement (1, 2, 3) capables d'accéder par adressage à la mémoire principale dudit système, l'ensemble formé par une adresse et l'information associée contenue dans la mémoire principale étant appelé "extrait", lesdits moyens de traitement (1, 2, 3) comportant une mémoire rapide (1, RAR, RAV) composée d'une pluralité d'emplacements ($RAR_i$, $RAV_i$), chaque emplacement étant capable de mémoriser un desdits extraits, chaque emplacement étant associé à une bascule de présence ($BPR_i$) et à une bascule de référence ($BRF_i$) initialement placées respectivement à un premier état logique, ladite bascule de présence ($BPR_i$) étant placée à un deuxième état logique lorsqu'un extrait est chargé dans l'emplacement ($RAR_i$, $RAV_i$) associé, ladite mémoire rapide (1, RAR, RAV) étant associée à des moyens de comparaison (4, 14) délivrant pour chaque emplacement un signal de coïncidence ($HIT_i$) ayant une première valeur logique lorsque l'adresse d'une information recherchée coïncide avec l'adresse de l'extrait présent dans ledit emplacement, ledit système étant caractérisé en ce qu'il comprend des moyens de détection de seuil (20) fournissant à partir des signaux de sortie des bascules de présence un signal de seuil (V) dont la valeur logique indique si le nombre d'extraits présents dans ladite mémoire rapide est au moins égale à une valeur de seuil (t) déterminée et en ce que pour chaque extrait présent, l'état de la bascule de référence associée ($BRF_i$) est commandé par un circuit de gestion (19, 19A, GRF) forçant ladite bascule de référence ($BRF_i$) à un second état logique lorsque ledit signal de coïncidence ($HIT_i$) indique une coïncidence alors que ledit signal de seuil (V) indique que le seuil est atteint.

8. Système selon la revendication 7, caractérisé en ce que, pour sélectionner un emplacement dans lequel sera chargé un extrait non encore présent dans ladite mémoire rapide, chaque bascule de présence ($BPR_i$) ou de référence ($BRF_i$) est associée à un circuit de propagation (CP) d'un signal de demande ($VP_i$, $RP_i$), en ce que, un rang (i) étant attribué à chaque emplacement ($RAR_i$, $RAV_i$), les circuits de propagation (CP) associés respectivement au bascule de présence ($BPR_i$) et de référence ($BRF_i$) sont montés respectivement en cascades, la sortie du circuit de propagation associé à la dernière bascule de présence ($BPR_n$) étant reliée à l'entrée du circuit de propagation (BCP) associé à la première bascule de référence ($BRF_1$), en ce que chaque circuit de propagation (CP) délivre un signal ($VP_i$, $RP_i$) représentatif de l'existence d'une demande lorsque le signal de demande amont ($VP_{i-1}$, $RP_{i-1}$) indique l'existence d'une demande alors que la bascule associée ($BPR_i$, $BRF_i$) est dans ledit deuxième état logique déterminé, en ce que le circuit de propagation (CP) associé à la première bascule de présence ($BPR_1$) reçoit en permanence un signal représentatif de l'existence d'une demande et en ce que chaque emplacement est associé à un circuit de sélection (CS) délivrant un signal ($S_i$) représentatif de la sélection dudit emplacement lorsque le signal de demande amont ($VP_{i-1}$, $RP_{i-1}$) associé à l'une des bascules ($BPR_i$, $BRF_i$) dudit emplacement signale l'existence d'une demande alors que ladite bascule ($BPR_i$, $BRF_i$) est dans ledit premier état déterminé.

9. Système selon la revendication 8, caractérisé en ce que lesdits moyens de détection de seuil (20) utilisent le signal d'état de la bascule de présence ($BPR_t$) associée à l'emplacement dont le rang est égal à ladite valeur de seuil prédéterminée (t).

10. Système selon l'une des revendications 7 à 9, caractérisé en ce qu'il possède un mécanisme de mémoire virtuelle paginée, en ce que ladite adresse de chaque extrait est une adresse virtuelle, ladite information associée est une adresse réelle et en ce que chaque emplacement de ladite mémoire rapide (1, RAV, RAR) est composé d'un registre d'adresse virtuelle (RAV$_i$) et d'un registre d'adresse réelle (RAR$_i$).

## Patentansprüche

1. Verfahren zum Zugreifen auf im Hauptspeicher eines Informationssystems enthaltene Informationen, wobei eine Information durch eine Adresse markiert ist, wobei die durch eine Information und ihre zugehörige Adresse gebildete Gesamtheit Extrakt" genannt wird, wobei das System einen schnellen Speicher (1, RAR, RAV) enthält, der aus mehreren Speicherplätzen (RAR$_i$, RAV$_i$) aufgebaut ist, wobei jeder Speicherplatz einen Extrakt speichern kann, wobei jedem Extrakt ein Präsenz-Kennzeichenbit (PR$_i$) und ein Referenz-Kennzeichenbit (RF$_i$) zugehört, die auf einem ersten bestimmten logischen Wert initialisiert sind, wobei ein Präsenzkennzeichen (PR$_i$) einen zweiten logischen Wert annimmt, wenn der entsprechende Extrakt im schnellen Speicher (1, RAV, RAR) vorhanden ist, wobei der Zugriff auf eine Information durch assoziatives Lesen ausgeführt wird, indem der im schnellen Speicher vorhandene Extrakt gesucht wird, dessen Adresse mit der Adresse der gesuchten Information übereinstimmt, wobei die Referenzkennzeichen (RF$_i$) eine Verwendung der zugehörigen Extrakte darstellen, um die Ausführung eines Algorithmus zum Laden von neuen gesuchten und noch nicht im schnellen Speicher vorhandenen Extrakten zu erlauben, wobei das Verfahren dadurch gekennzeichnet ist, daß die Referenzkennzeichen (RF$_i$) auf ihrem ersten logischen Wert gehalten werden, so lange die Präsenzkennzeichen anzeigen, daß die Anzahl der im schnellen Speicher vorhandenen Extrakte kleiner als ein bestimmter Schwellenwert (t) ist, und daß ein Referenzkennzeichen (RF$_i$) auf einen zweiten logischen Wert gezwungen wird, wenn der zugehörige Extrakt verwendet wird, vorausgesetzt, daß die Präsenzkennzeichen anzeigen, daß die Anzahl der vorhandenen Extrakte wenigstens gleich dem Schwellenwert (t) ist.

2. Verfahren gemäß Anspruch 1, dadurch gekennzeichnet, daß dann, wenn jedem Speicherplatz des schnellen Speichers eine Ordnungszahl zugewiesen ist, die Extrakte anfangs in chronologischer Reihenfolge in die Speicherplätze mit ansteigender Ordnungszahl geladen werden und daß der Wert des Präsenzkennzeichens (PR$_i$), dessen Ordnungszahl (i) gleich dem Schwellenwert (t) ist, den Hinweis liefert, daß der Schwellenwert (t) erreicht worden ist.

3. Verfahren gemäß einem der Ansprüche 1 oder 2, dadurch gekennzeichnet, daß dann, wenn eine gesuchte Information im schnellen Speicher nicht vorhanden ist, die Information dann im Hauptspeicher gesucht wird und der entsprechende Extrakt im schnellen Speicher in einen Speicherplatz geladen wird, dessen Ordnungszahl durch den Ladealgorithmus bestimmt wird, daß das zugehörige Präsenzkennzeichen (PR$_i$) synchron mit dem Laden auf den zweiten logischen Wert gezwungen wird und daß anschließend eine neue assoziative Suche der gesuchten Information ausgeführt wird.

4. Verfahren gemäß Anspruch 3, dadurch gekennzeichnet, daß der Ladealgorithmus darin besteht, daß in ansteigender Reihenfolge die Ordnungszahl des ersten Extrakts, dessen Präsenzkennzeichen (PR$_i$) den ersten bestimmten logischen Wert besitzt, oder bei einem Fehlgehen die Ordnungszahl des ersten Extrakts gesucht wird, dessen Referenzkennzeichen (RF$_i$) den ersten bestimmten logischen Wert besitzt.

5. Verfahren gemäß einem der Ansprüche 1 bis 4, dadurch gekennzeichnet, daß das System einen Mechanismus eines seitenweisen virtuellen Speichers besitzt, wobei die Adresse eines jeden Extrakts eine virtuelle Seitenadresse ist und die zugehörige Information die reelle Adresse der Seite ist.

6. Verfahren gemäß einem der Ansprüche 1 bis 4, dadurch gekennzeichnet, daß dann, wenn der Hauptspeicher seitenweise organisiert ist, die Adresse eines jeden Extrakts eine reelle Seitenadresse ist und die zugehörige Information durch die in der Seite enthaltenen Daten gebildet ist.

7. Informationssystem, das Verarbeitungsmittel (1, 2, 3) enthält, die durch Adressierung auf den Hauptspeicher des Systems zugreifen können, wobei die durch eine Adresse und die im Hauptspeicher enthaltene zugehörige Information gebildete Gesamtheit "Extrakt" genannt wird, wobei die Verarbeitungsmittel (1, 2, 3) einen schnellen Speicher (1, RAR, RAV) enthalten, der aus mehreren Speicherplätzen (RAR$_i$, RAV$_i$) aufgebaut ist, wobei jeder Speicherplatz einen der Extrakte speichern kann, wobei jeder Speicherplatz einer Präsenz-Kippschaltung (BPR$_i$) und einer Referenz-Kippschaltung (BRF$_i$) zugeordnet ist, die anfangs jeweils auf einen ersten logischen Zustand gesetzt werden, wobei die Präsenz-Kippschaltung (BPR$_i$) auf einen zweiten logischen Zustand gesetzt wird, wenn ein Extrakt in den zugehörigen Speicherplatz (RAR$_i$, RAV$_i$) geladen wird, wobei der schnelle Speicher (1, RAR, RAV) mit Vergleichsmitteln (4, 14) verbunden ist, die für jeden Speicherplatz ein Koinzidenzsignal (HIT$_i$) ausgeben, das einen ersten logischen Wert besitzt, wenn die Adresse einer gesuchten Information mit der Adresse des im Speicherplatz vorhandenen Extrakts übereinstimmt, wobei das System dadurch gekennzeichnet ist, daß es Schwellenwerterfassungsmittel (20) enthält, die ausgehend von den Ausgangssignalen der Präsenz-Kippschaltungen ein Schwellensignal (V) ausgeben, dessen logischer Wert anzeigt, ob die Anzahl der im schnellen Speicher vorhandenen Extrakte wenigstens gleich einem bestimmten Schwellenwert (t) ist, und daß für jeden vorhandenen Extrakt der Zustand der zugehörigen Referenz-Kippschaltung (BRF$_i$) durch eine Steuerschaltung (19, 19A, GRF) gesteuert wird, die die Referenz-Kippschaltung (BRF) auf einen zweiten logischen Zustand zwingt, wenn das Koinzidenzsignal (HIT$_i$) eine Koinzidenz anzeigt, während das Schwellensignal (V) anzeigt, daß die Schwelle erreicht ist.

8. System gemäß Anspruch 7, dadurch gekennzeichnet, daß für die Auswahl eines Speicherplatzes, in den ein noch nicht im schnellen Speicher vorhandener Extrakt geladen werden soll, jede Präsenz-Kippschaltung (BPR$_i$) oder jede Referenz-Kippschaltung (BRF$_i$) einer Übertragungsschaltung (CP) für ein Anforderungssignal (VP$_i$, RP$_i$) zugeordnet ist, daß, wenn jeder Speicherstelle (RAR$_i$, RAV$_i$) eine Ordnungszahl (i) zugeordnet ist, die Übertragungsschaltungen (CP), die der Präsenz-Kippschaltung (BPR$_i$) bzw. der Referenz-Kippschaltung (BRF$_i$) zugeordnet sind, jeweils in Kaskade geschaltet sind, wobei der Ausgang der Übertragungsschaltung, die der letzten Präsenz-Kippschaltung (BPR$_n$) zugeordnet ist, mit dem Eingang der Übertragungsschaltung (BCP) verbunden ist, die der ersten Referenz-Kippschaltung (BRF$_1$) zugeordnet ist, daß jede Übertragungsschaltung (CP) ein Signal (VP$_i$, RP$_i$) ausgibt, das das Vorhandensein einer Anforderung darstellt, wenn das eingangsseitige Anforderungssignal (VP$_{i-1}$, RP$_{i-1}$) das Vorhandensein einer Anforderung anzeigt, während die zugehörige Kippschaltung (BPR$_i$, BRF$_i$) im zweiten bestimmten logischen Zustand ist, daß die Übertragungsschaltung (CP), die der ersten Präsenz-Kippschaltung (BPR$_1$) zugeordnet ist, ständig ein Signal empfängt, das das Vorhandensein einer Anforderung darstellt, und daß jedem Speicherplatz eine Wählschaltung (CS) zugeordnet ist, die ein Signal (S$_i$) ausgibt, das die Wahl des genannten Speicherplatzes darstellt, wenn das eingangsseitige Anforderungssignal (VP$_{i-1}$, RP$_{i-1}$), das einer der Kippschaltungen (BPR$_i$, BRF$_i$) des Speicherplatzes zugehört, das Vorhandensein einer Anforderung signalisiert, während die Kippschaltung (BPR$_i$, BRF$_i$) in dem bestimmten ersten Zustand ist.

9. System gemäß Anspruch 8, dadurch gekennzeichnet, daß die Schwellenwert-Erfassungsmittel (20) das Zustandssignal derjenigen Präsenz-Kippschaltung (BPR$_t$) verwenden, die dem Speicherplatz zugeordnet ist, dessen Ordnungszahl gleich dem vorgegebenen Schwellenwert (t) ist.

10. System gemäß einem der Ansprüche 7 bis 9, dadurch gekennzeichnet, daß es einen Mechanismus eines seitenweisen virtuellen Speichers besitzt, daß die Adresse eines jeden Extrakts eine virtuelle Adresse ist und die zugehörige Information eine reelle Adresse ist und daß jeder Speicherplatz des schnellen Speichers (1, RAV, RAR) aus einem Register für eine virtuelle Adresse (RAV$_i$) und aus einem Register für eine reelle Adresse (RAR$_i$) aufgebaut ist.

## Claims

1. A method for accessing information contained in the main memory of a computer system, an information component being located by an address, the set formed by an information component and its address being called an "extract", said system comprising a high-speed memory (1, RAR, RAV) composed of a plurality of locations (RAR$_i$, RAV$_i$), each location being capable of storing an extract, each extract being associated with a presence indicator bit (PR$_i$) and a reference indicator bit (RF$_i$) initialised to a first given logic value, a presence indicator (PR$_i$) taking a second logic value when the corresponding extract is present in said high-speed memory (1, RAR, RAV), the accessing of an information component being performed by associative reading, searching for the extract present in the high-speed memory, the address of which extract matches the address of the information component sought, said reference indicators representing a use of the associated extracts in order to allow the implementation of an algorithm for loading the new extracts sought and no longer present in the high-speed memory, said method being characterised in that the reference indicators (RF$_i$) are maintained at their first logic value as long as the presence indicators indicate that the number of extracts present in the high-speed memory is less than a given threshold value (t) and that a reference indicator (RF$_i$) is forced to a second logic value when the associated extract is used, on condition that the presence indicators indicate that the number of extracts present is at least equal to said threshold value (t).

2. A method according to claim 1, characterised in that, a rank being assigned to each location in said high-speed memory, the extracts are initially loaded into locations of increasing rank in chronological order and in that the value of the presence indicator ($PR_i$) the rank of which is equal to said threshold value (t) provides the indication that said threshold value (t) has been reached.

3. A method according to claim 1 or 2, characterised in that, if an information component sought is absent from the high-speed memory, said information component is then sought in the main memory and the corresponding extract is loaded into the high-speed memory at a location the rank of which is determined by said loading algorithm, in that the associated presence indicator ($PR_i$) is forced to said second logic value in synchronism with said loading and in that a new associative search for the information sought is then performed.

4. A method according to claim 3, characterised in that, said loading algorithm consists of searching, in order of increasing rank, for the first extract the presence indicator ($PR_i$) of which is at said first given logic value, or failing that, for the first extract the reference indicator ($RF_i$) of which is at said first given logic value.

5. A method according to one of claims 1 to 4, characterised in that, said computer system having a paginated virtual memory mechanism, said address of each extract is a virtual page address and said associated information component is the real address of said page.

6. A method according to one of claims 1 to 4, characterised in that, the main memory being organised in pages, said address of each extract is a real page address, and said associated information component is constituted by the data contained in said page.

7. A computer system comprising processing means (1, 2, 3) capable of accessing the main memory of said system by addressing, the set formed by an address and the associated information component contained in the main memory being called an "extract", said processing means (1, 2, 3) comprising a high-speed memory (1, RAR, RAV) composed of a plurality of locations ($RAR_i$, $RAV_i$), each location being capable of storing one of said extracts, each location being associated with a presence flip-flop ($BPR_i$)

and a reference flip-flop initially set respectively to a first logic state, said presence flip-flop being set to a second logic state when an extract is loaded into the associated location ($RAR_i$, $RAV_i$), said high-speed memory (1, RAR, RAV) being associated with comparison means (4, 14) delivering for each location a coincidence signal ($HIT_i$) having a first logic value when the address of an information component sought matches the address of the extract present in said location, said system being characterised in that it comprises threshold detection means (20) furnishing from output signals of the presence flip-flops a threshold signal (V) the logic value of which indicates whether the number of extracts present in said high-speed memory is at least equal to a given threshold value (t) and in that for each extract present, the state of the associated reference flip-flop ($BRF_i$) is controlled by a management circuit (19, 19A, GRF) forcing said reference flip-flop ($BRF_i$) to a second logic state when said coincidence signal ($HIT_i$) indicates a match while said threshold signal (V) indicates that the threshold has been reached.

8. A system according to claim 7, characterised in that, to select a location into which an extract not yet present in said high-speed memory will be loaded, each presence ($BPR_i$) or reference ($BRF_i$) flip-flop is associated with a propagation circuit (CP) for a request signal ($VP_i$, $RP_i$), and in that, a rank (i) being assigned to each location ($RAR_i$, $RAV_i$), the propagation circuits (CP) associated respectively with the presence ($BPR_i$) and reference ($BRF_i$) flip-flop are arranged in cascades, the output of the propagation circuit associated with the last presence flip-flop ($BPR_n$) being connected to the input of the propagation circuit (BCP) associated with the first reference flip-flop (BRF1), in that each propagation circuit delivers a signal ($VP_i$, $RP_i$) representing the existence of a request when the upstream request signal ($VP_{i-1}$, $RP_{i-1}$) indicates the existence of a request while the associated flip-flop ($BPR_i$, $BRF_i$) is in said second given logic state, in that the propagation circuit (CP) associated with the first presence flip-flop ($BPR_i$) continuously receives a signal representing the existence of a request and in that each location is associated with a selection circuit (CS) delivering a signal ($S_i$) representing the selection of said location when the upstream request signal ($VP_{i-1}$, $RP_{i-1}$) associated with one of the flip-flops ($BPR_i$, $BRF_i$) of said location signals the existence of a request while said flip-flop ($BPR_i$, $BRF_i$) is in said first given state.

9. A system according to claim 8, characterised in that said threshold detection means (20) uses the state signal of the presence flip-flop ($BPR_t$) associated with the location the rank of which is equal to said predetermined threshold value (t).

10. A system according to one of claims 7 to 9 characterised in that it has a paginated virtual memory mechanism, in that said address of each extract is a virtual address, said associated information component is a real address and in that each location of said high-speed memory (1, RAV, RAR) is composed of a virtual address register ($RAV_i$) and a real address register ($RAR_i$).

FIG. 1

FIG. 2

FIG. 3

FIG. 4

FIG. 5

FIG. 6

FIG. 7

FIG. 10

FIG. 8

FIG. 9